# EUROPEAN PATENT APPLICATION

(11) **EP 1 211 264 A1**
(43) Date of publication of application: **05.06.2002**
(21) Application number: 01919908.2
(22) Date of filing: 12.04.2001
(51) Int. Cl.: C08F 4/60, C08F 210/00, C08F 212/00

(54) **PROCESS FOR PRODUCING ALPHA-OLEFIN/AROMATIC VINYL COPOLYMER**

(30) Priority: 13.04.2000 JP 2000112208
(71) Applicant: IDEMITSU PETROCHEMICAL CO., LTD., Tokyo 130-0015 (JP)
(72) Inventor: YOKOTA, Kiyohiko, Ichihara-shi, Chiba 299-0107 (JP); TANI, Noriyuki, Ichihara-shi, Chiba 299-0107 (JP); ISHIHARA, Nobuhide, Ichihara-shi, Chiba 299-0107 (JP)
(74) Representative: Gille Hrabal Struck Neidlein Prop Roos
(86) International application number: JP0103160
(87) International publication number: WO0179304

(57) **Abstract**

The invention provides a method for producing α-olefin - aromatic vinyl compound copolymers of high quality at high productivity. The method for producing an α-olefin - aromatic vinyl compound copolymer including copolymerizing an α-olefin and an aromatic vinyl compound in the presence of a copolymerization catalyst formed of a transition metal compound component (A) and a co-catalyst component (B) wherein the component (A) employs a transition metal compound having two cross-linking groups wherein at least one of the cross-linking groups is a cross-linking group exclusively formed of a carbon-carbon bond.

## Description

### Technical Field

The present invention relates to a method for producing α-olefin - aromatic vinyl compound copolymers and, more particularly, to a method for producing α-olefin - aromatic vinyl compound copolymers of high quality at high productivity.

### Background Art

Conventionally, in the field of the production of α-olefin - aromatic vinyl compound copolymers such as ethylene - styrene copolymer, production methods including copolymerization in the presence of a Ziegler-Natta catalyst have been studied. However, the catalyst has poor activity with respect to copolymerization, and the polymerization products have disadvantageously contained large amounts of homopolymersin.

In order to solve the aforementioned problem, there have been proposed methods for producing α-olefin - aromatic vinyl compound copolymers by employing a copolymerization catalyst formed of a transition metal compound containing a metallocene skeleton (A) and a co-catalyst component such as aluminoxane or a boron compound (B), the methods being disclosed in, for example, Japanese Patent Application Laid-Open (*kokai*) Nos. 3-25007, 6-49132, 7-278230, 8-269134, 9-40709, 9-183809, 9-302014, and 9-309925 and Japanese Patent No. 2684154.

However, when the aforementioned catalysts are employed, a co-catalyst component such as aluminoxane must be used in a large amount so as to attain satisfactorily high activity with respect to copolymerization, thus leading to an increase in catalyst cost for producing the copolymers. In addition, a large amount of catalyst residue remains in the produced copolymers, causing coloring or foaming of the copolymers and generating gel and fish eyes in the molded products, these effects being problematic. Under such circumstances, further improvement in catalyst activity is desired so as to reduce catalyst costs, enhance productivity, and improve production quality.

### Disclosure of the Invention

Thus, an object of the present invention is to provide a method for producing α-olefin - aromatic vinyl compound copolymers of high quality at high productivity, by means of enhancing the activity respect to copolymerization possessed by the catalyst for use in the production of α-olefin - aromatic vinyl compound copolymers.

The present inventors have carried out extensive studies in order to solve the aforementioned problems, and have found that a catalyst formed of a transition metal compound having a specific chemical structure and a co-catalyst component in combination exhibits excellent activity with respect to copolymerization of α-olefin and an aromatic vinyl compound. The present invention has been accomplished on the basis of this finding.

Accordingly, the present invention provides the following:
(1) a method for producing an α-olefin - aromatic vinyl compound copolymer comprising copolymerizing an α-olefin and an aromatic vinyl compound in the presence of a copolymerization catalyst formed of a transition metal compound, which is called component (A), and a co-catalyst, which is called component (B), wherein component (A) employs a transition metal compound including a metallocene skeleton having two cross-linking groups wherein at least one of the cross-linking groups is a cross-linking group exclusively formed of a carbon-carbon bond cross-linking skeleton.
(2) a method for producing an α-olefin - aromatic vinyl compound copolymer comprising copolymerizing an α-olefin, aromatic vinyl compound, a cyclic olefin, and/or a diene in the presence of a copolymerization catalyst formed of a transition metal compound component (A) and a co-catalyst component (B) wherein the component (A) employs a transition metal compound including a metallocene skeleton having two cross-linking groups wherein at least one of the cross-linking groups is a cross-linking group exclusively formed of a carbon-carbon bond cross-linking skeleton.
(3) a method for producing an α-olefin - aromatic vinyl compound copolymer according to the aforementioned (1) or (2), wherein the two cross-linking groups of the metallocene skeleton are different from each other.
(4) a method for producing an α-olefin - aromatic vinyl compound copolymer according to any one of the aforementioned (1) to (3), wherein the copolymerization catalyst further containing an alkylating agent (C) is employed as a catalyst component.
(5) a method for producing an α-olefin - aromatic vinyl compound copolymer according to any one of the aforementioned (1) to (4), wherein copolymerization is performed in the presence of an additional chain-transfer agent.
(6) a method for producing an α-olefin - styrene copolymer according to any one of the aforementioned (1) to (5), wherein the aromatic vinyl compound is styrene.

### Best Modes for Carrying Out the Invention

The present invention is directed to a method for producing an α-olefin - aromatic vinyl compound copolymer comprising copolymerizing an α-olefin and an aromatic vinyl compound in the presence of a copolymerization catalyst formed of a transition metal compound component (A) and a co-catalyst component (B) wherein the component (A) employs a transition metal compound having a chemical structure with a metallocene skeleton having two cross-linking groups wherein at least one of the cross-linking groups is a cross-linking group exclusively formed of a carbon-carbon bond cross-linking skeleton.

Preferably, the aforementioned two cross-linking groups of the metallocene skeleton are different from each other.

In the present invention, the transition metal compound of the component (A) is represented by the following formula [1]: 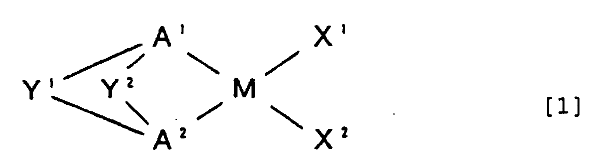 wherein each of A¹ and A² represents a cyclopentadienyl group, a substituted cyclopentadienyl group, an indenyl group, or a substituted indenyl group; each of Y¹ and Y² represents a substituted or unsubstituted alkylene group, a substituted or unsubstituted silylene group, or a germanium-containing group, at least one of Y¹ and Y² being a substituted or
unsubstituted alkylene group; M represents titanium, zirconium, or hafnium; and each of X¹ and X² represents a hydrogen atom, a halogen atom, an alkyl group, an aryl group, an arylalkyl group, an alkylaryl group, an alkoxy group, an aryloxy group, a silicon-containing group, or a sulfur-containing group.

The aforementioned formula [1] will next be described in detail.
(1) Each of A¹ and A² has a structure represented by the following: 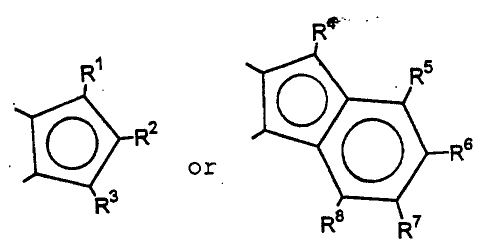 wherein each of R¹ to R⁸ represents a hydrogen atom, a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group, with a hydrogen atom, a hydrocarbon group, and a silicon-containing hydrocarbon group being preferred. The hydrocarbon group may be bonded . as a monovalent group. When a plurality of relevant hydrocarbon groups are contained in the above structure, two of them may be linked to each other to thereby form a ring structure together with a portion of the cyclopentadienyl group or that of the indenyl group. Specific examples of the hydrocarbon group include a methyl group, an ethyl group, a propyl group, an isopropyl group, a butyl group, an isobutyl group, a tert-butyl group, a pentyl group, a neopentyl group, a cyclohexyl group, a phenyl group, a 2,6-dimethylphenyl group, and a 2,6-diisopropylphenyl group. The silicon-containing hydrocarbon group preferably has 1-20 carbon atoms, with 1-12 carbon atoms being particularly preferred.
   Specific examples include a trimethylsilyl group and a trimethylsilylmethyl group.
(2) When Y¹ and Y² are alkylene groups, examples thereof include a methylene group, an ethylene group, a propane-1,3-diyl group, and a butane-1,4-diyl group. Examples of substituents which provide the aforementioned substituted alkylene group include a methyl group, an ethyl group, a propyl group, a butyl group, a tert-butyl group, a cyclohexyl group, a phenyl group, and a 2,6-dimethylphenyl group. A ring may be formed between substituents. Examples of the substituted alkylenes include an isopropylidene group, a cyclohexylidene group, a 1,2-cyclohexanediyl group, a tetramethylethylene group, a phenylmethylmethylene group, a fluorene-9,9-diyl group. When Y¹ and Y² are silylene groups, examples thereof include a silylene group and a disilylene group. Examples of substituents which provide the aforementioned substituted silylene group includes a methyl group, an ethyl group, a propyl group, a butyl group, a tert-butyl group, a cyclohexyl group, a phenyl group, and a 2,6-dimethylphenyl group. Two substituents may be linked to each other. Examples of the substituted silylenes include a dimethylsilylene group, a diethylsilylene group, a diphenylsilylene group, a phenylmethylsilylene group, a tetramethyldisilylene group, a 1-silacyclohexane-1,1-diyl group, and a 9-silafluorene-9,9-diyl group.
(3) Examples of preferred X¹ and X² ligands include a hydrogen atom, a halogen atom, an alkyl group, an arylalkyl group, and an alkoxy group. The alkyl group, aryl group, arylalkyl group, alkylaryl group, alkoxy group, aryloxy group, silicon-containing group, or sulfur-containing group preferably has 1-20 carbon atoms, with 1-12 carbon atoms being particularly preferred.

Examples of the alkyl group include methyl, ethyl, propyl, isopropyl, butyl, isobutyl, tert-butyl, pentyl, neopentyl, and cyclohexyl. Examples of the aryl group include phenyl, toluyl, 2,6-dimethylphenyl, 2,4,6-trimethylphenyl, and 2,6-diisopropylphenyl. Examples of the arylalkyl group include benzyl, 4-methylbenzyl, 2,6-dimethylbenzyl, and phenethyl. Examples of the alkoxy group include methoxy, ethoxy, propoxy, isopropoxy, butoxy, and tert-butoxy. Examples of the aryloxy group include phenoxy, p-methylphenoxy, 2,6-dimethylphenoxy, 2,6-diisopropylphenoxy, and 2,6-diphenylphenoxy. Examples of the silicon-containing group include trimethylsilyl, trimethylsilylmethyl, bis(trimethylsilyl)methyl, tris(trimethylsilyl)methyl, tris(trimethylsilyl)silyl, phenyldimethylsilyl, and phenyldimethylsilylmethyl. Examples of the sulfur-containing group include methylthioxy, ethylthioxy, and phenylthioxy.

It is particularly important that the aforementioned transition metal compound represented by formula [1] possess a chemical structure wherein at least one of Y¹ and Y² is a cross-linking group exclusively formed of a carbon-carbon bond cross-linking skeleton. Specific examples of titanium compounds having such a chemical structure include
(isopropylidene)(dimethylsilylene)bis(cyclopentadienyl)-titanium dichloride,
(isopropylidene)(dimethylsilylene)bis(cyclopentadienyl)-titanium(dimethyl),
(isopropylidene)(dimethylsilylene)bis(cyclopentadienyl)-titanium(dibenzyl),
(isopropylidene)(dimethylsilylene)bis(cyclopentadienyl)-titanium(diphenyl),
(isopropylidene)(dimethylsilylene)bis(cyclopentadienyl)-titanium dimethoxide,
(isopropylidene)(dimethylsilylene)bis(cyclopentadienyl)-titanium diphenoxide,
(isopropylidene)(dimethylsilylene)bis(cyclopentadienyl)-titanium bis(trimethylsilyl),
(isopropylidene)(dimethylsilylene)bis(cyclopentadienyl)-titanium bis(trimethylsilylmethyl),
(isopropylidene)(dimethylsilylene)bis(cyclopentadienyl)-titanium bis(trifluoromethanesulfonate),
(isopropylidene)(dimethylsilylene)bis(cyclopentadienyl)-titanium dihydride,
(isopropylidene)(dimethylsilylene)bis(cyclopentadienyl)-titanium chloride hydride,
(isopropylidene)(dimethylsilylene)bis(cyclopentadienyl)-titanium chloride methoxide, (1,1'-isopropylidene)(2,2'-dimethylsilylene)bis(4-methylcyclopentadienyl)titanium dichloride, (1,1'-isopropylidene)(2,2'-dimethylsilylene)bis(3,5-dimethylcyclopentadienyl)titanium dichloride, (1,1'-isopropylidene)(2,2'-dimethylsilylene)bis(3,4,5-trimethylcyclopentadienyl)-titanium dichloride, (1,1'-isopropylidene)(2,2'-dimethylsilylene)bis(3,4-dimethylcyclopentadienyl)titanium dichloride, (1,1'-isopropylidene)(2,2'-dimethylsilylene)bis(3,4-diethylcyclopentadienyl)titanium dichloride, (1,1'-isopropylidene)(2,2'-dimethylsilylene)bis(3,4-diisopropylcyclopentadienyl)-titanium dichloride, (1,1'-isopropylidene)(2,2'-dimethylsilylene)bis(3,4-di-n-butylcyclopentadienyl)titanium dichloride, (1,1'-isopropylidene) (2,2'-dimethylsilylene)bis(3,4-di-tert-butylcyclopentadienyl)-titanium dichloride, (1,1'-isopropylidene)(2,2'-dimethylsilylene)bis(3,4-diphenylcyclopentadienyl)titanium dichloride, (1,1'-isopropylidene)(2,2'-dimethylsilylene)bis(3,4-dibenzylcyclopentadienyl)titanium dichloride, (2,2'-isopropylidene)(1,1'-dimethylsilylene)bis(indenyl)titanium dichloride, (1,2'-isopropylidene)(2,1'-dimethylsilylene)bis(indenyl)titanium dichloride, (2,2'-isopropylidene)(1,1'-dimethylsilylene)bis (tetrahydroindenyl)titanium dichloride, (2,2'-isopropylidene) (1,1'-dimethylsilylene)bis(3-methylindenyl)titanium dichloride, (2,2'-isopropylidene)(1,1'-dimethylsilylene)bis(3-isopropylindenyl)titanium dichloride, (2,2'-isopropylidene)(1,1'-dimethylsilylene)bis(3-n-butylindenyl)-titanium dichloride, (2,2'-isopropylidene)(1,1'-dimethylsilylene)bis(3-tert-butylindenyl)titanium dichloride, (2,2'-isopropylidene)(1,1'-dimethylsilylene)bis(3-phenylindenyl)titanium dichloride, (2,2'-isopropylidene)(1,1'-dimethylsilylene)bis(3-benzylindenyl)-titanium dichloride, (2,2'-isopropylidene)(1,1'-dimethylsilylene)bis(4,7-dimethylindenyl)titanium dichloride, (2,2'-isopropylidene)(1,1'-dimethylsilylene)bis(3,4,7-trimethylindenyl)titanium dichloride, (2,2'-isopropylidene)(1,1'-dimethylsilylene)bis(5,6-dimethylindenyl)titanium dichloride, (2,2'-isopropylidene)(1,1'-dimethylsilylene)bis(4-phenylindenyl)-titanium dichloride, (2,2'-isopropylidene)(1,1'-dimethylsilylene)bis(5-phenylindenyl)titanium dichloride, (2,2'-isopropylidene)(1,1'-dimethylsilylene)bis(6-phenylindenyl)titanium dichloride, (2,2'-isopropylidene)(1,1'-dimethylsilylene)bis(4-phenyl-7-methylindenyl)titanium dichloride, (2,2'-isopropylidene)(1,1'-dimethylsillene)bis(4,5-benzoindenyl)-titanium dichloride, (2,2'-isopropylidene)(1,1'-dimethylsilylene)bis(5,6-benzoindenyl)titanium dichloride, (2,2'-isopropylidene)(1,1'-dimethylsilylene)bis(6,7-benzoindenyl)titanium dichloride, (1,1'-isopropylidene)(2,2'-dimethylsilylene)(4-methylcyclopentadienyl)(3',5'-dimethylcyclopentadienyl)titanium dichloride, (1,1'-isopropylidene)(2,2'-dimethylsilylene)(4-methylcyclopentadienyl)(3',5'-diisopropylcyclopentadienyl)titanium dichloride, (1,1'-isopropylidene)(2,2'-dimethylsilylene)(4-methylcyclopentadienyl)(3',5'-diphenylcyclopentadienyl)-titanium dichloride, (1,1'-isopropylidene)(2,2'-dimethylsilylene)(4-tert-butylcyclopentadienyl)(3',5'-dimethylcyclopentadienyl)titanium dichloride, (1,1'-isopropylidene)(2,2'-dimethylsilylene)(4-phenylcyclopentadienyl)(3',5'-dimethylcyclopentadienyl)-titanium dichloride, (1,1'-isopropylidene)(2,2'-dimethylsilylene)(cyclopentadienyl)(3',4'-dimethylcyclopentadienyl)titanium dichloride, (1,1'-isopropylidene) (2, 2'-dimethylsilylene)(cyclopentadienyl)(3',4'-diisobutylcyclopentadienyl)titanium dichloride, (1,1'-isopropylidene)(2,2'-dimethylsilylene)(3,4-dimethylcyclopentadienyl)(3',5'-diphenylcyclopentadienyl)-titanium dichloride, (1,1'-isopropylidene)(2,2'-dimethylsilylene)(3,4-dimethylcyclopentadienyl)(3',5'-diisopropylcyclopentadienyl)titanium dichloride, (1,1'-isopropylidene) (2,2'-dimethylsilylene)(3,4-dimethylcyclopentadienyl)(3',5'-diphenylcyclopentadienyl)-titanium dichloride, (2,2'-isopropylidene)(1,1'-dimethlsilylene)(cyclopentadienyl)(indenyl)titanium dichloride,
(ethylene)(dimethylsilylene)bis(cyclopentadienyl)titanium dichloride, (2,2'-ethylene)(1,1'-dimethylsilylene)bis(indenyl)titanium dichloride, (1,2'-ethylene)(2,1'-dimethylsilylene)bis(indenyl)titanium dichloride, bis(isopropylidene)bis(cyclopentadienyl)titanium dichloride,
ethylene(isopropylidene)bis(cyclopentadienyl)titanium dichloride, bis(ethylene)bis(cyclopentadienyl)titanium dichloride,
(isopropylidene)(dimethylgermylene)bis(cyclopentadienyl) - titanium dichloride, (1,2'-ethylene) (2,1'-ethylene)bis(indenyl)titanium dichloride, (1,2'-ethylene)(2,1'-ethylene)bis(3-normal-butylindenyl)titanium dichloride, and (1,2'-ethylene)(2,1'-ethylene)bis(3-trimethylsilylmethylindenyl)titanium dichloride.

Examples of zirconium compounds having the aforementioned specific chemical structure include
(isopropylidene)(dimethylsilylene)bis(cyclopentadienyl)-zirconium dichloride,
(isopropylidene)(dimethylsilylene)bis(cyclopentadienyl)-zirconium(dimethyl),
(isopropylidene) (dimethylsilylene)bis(cyclopentadienyl)-zirconium(dibenzyl),
(isopropylidene)(dimethylsilylene)bis(cyclopentadienyl)-zirconium(diphenyl),
(isopropylidene)(dimethylsilylene)bis(cyclopentadienyl)-zirconium dimethoxide,
(isopropylidene)(dimethylsilylene)bis(cyclopentadienyl)-zirconium diphenoxide,
(isopropylidene)(dimethylsilylene)bis(cyclopentadienyl)-zirconium bis(trimethylsilyl),
(isopropylidene)(dimethylsilylene)bis(cyclopentadienyl)-zirconium bis(trimethylsilylmethyl),
(isopropylidene)(dimethylsilylene)bis(cyclopentadienyl)-zirconium bis(trifluoromethanesulfonate),
(isopropylidene)(dimethylsilylene)bis(cyclopentadienyl)-zirconium dihydride,
(isopropylidene)(dimethylsilylene)bis(cyclopentadienyl)-zirconium chloride hydride,
(isopropylidene)(dimethylsilylene)bis(cyclopentadienyl)-zirconium chloride methoxide, (1,1'-isopropylidene) (2,2'-dimethylsilylene)bis(4-methylcyclopentadienyl)zirconium dichloride, (1,1'-isopropylidene)(2,2'-dimethylsilylene)bis(3,5-dimethylcyclopentadienyl)zirconium dichloride, (1,1'-isopropylidene)(2,2'-dimethylsilylene)bis(3,4,5-trimethylcyclopentadienyl)-zirconium dichloride, (1,1'-isopropylidene)(2,2'-dimethylsilylene)bis(3,4-dimethylcyclopentadienyl)zirconium dichloride, (1,1'-isopropylidene)(2,2'-dimethylsilylene)bis(3,4-diethylcyclopentadienyl)zirconium dichloride, (1,1'-isopropylidene)(2,2'-dimethylsilylene)bis(3,4-diisopropylcyclopentadienyl)-zirconium dichloride, (1,1'-isopropylidene)(2,2'-dimethylsilylene)bis(3,4-di-n-butylcyclopentadienyl)-zirconium dichloride, (1,1'-isopropylidene)(2,2'-dimethylsilylene)bis(3,4-di-tert-butylcyclopentadienyl)-zirconium dichloride, (1,1'-isopropylidene)(2,2'-dimethylsilylene)bis(3,4-diphenylcyclopentadienyl)zirconium dichloride, (1,1'-isopropylidene)(2,2'-dimethylsilylene)bis(3,4-dibenzylcyclopentadienyl)zirconium dichloride, (2,2'-isopropylidene)(1,1'-dimethylsilylene)bis(indenyl)zirconium dichloride, (1,2'-isopropylidene)(2,1'-dimethylsilylene)bis(indenyl)zirconium dichloride, (2,2'-isopropylidene)(1,1'-dimethylsilylene)bis(tetrahydroindenyl)zirconium dichloride, (2,2'-isopropylidene)(1,1'-dimethylsilylene)bis(3-methylindenyl)zirconium dichloride, (2,2'-isopropylidene)(1,1'-dimethylsilylene)bis(3-isopropylindenyl)zirconium dichloride, (2,2'-isopropylidene)(1,1'-dimethylsilylene)bis(3-n-butylindenyl)-zirconium dichloride, (2,2'-isopropylidene)(1,1'-dimethylsilylene)bis(3-tert-butylindenyl)zirconium dichloride, (2,2'-isopropylidene)(1,1'-dimethylsilylene)bis(3-phenylindenyl)zirconium dichloride, (2,2'-isopropylidene)(1,1'-dimethylsilylene)bis(3-benzylindenyl)-zirconium dichloride, (2,2'-isopropylidene)(1,1'-dimethylsilylene)bis(4,7-dimethylindenyl)zirconium dichloride, (2,2'-isopropylidene)(1,1'-dimethylsilylene)bis(3,4,7-trimethylindenyl)zirconium dichloride, (2,2'-isopropylidene)(1,1'-dimethylsilylene)bis (5,6-dimethylindenyl) zirconium dichloride, (2,2'-isopropylidene) (1,1'-dimethylsilylene)bis (4-phenylindenyl)-zirconium dichloride, (2,2'-isopropylidene) (1,1'-dimethylsilylene)bis(5-phenylindenyl)zirconium dichloride, (2,2'-isopropylidene) (1,1'-dimethylsilylene)bis(6-phenylindenyl)zirconium dichloride, (2,2'-isopropylidene)(1,1'-dimethylsilylene)bis(4-phenyl-7-methylindenyl)zirconium dichloride, (2,2'-isopropylidene)(1,1'-dimethylsillene)bis(4,5-benzoindenyl)-zirconium dichloride, (2,2'-isopropylidene)(1,1'-dimethylsilylene)bis(5,6-benzoindenyl)zirconium dichloride, (2,2'-isopropylidene)(1,1'-dimethylsilylene)bis(6,7-benzoindenyl)zirconium dichloride, (1,1'-isopropylidene)(2,2'-dimethylsilylene)(4-methylcyclopentadienyl)(3',5'-dimethylcyclopentadienyl)-zirconium dichloride, (1,1'-isopropylidene)(2,2'-dimethylsilylene)(4-methylcyclopentadienyl)(3',5'-diisopropylcyclopentadienyl)zirconium dichloride, (1,1'-isopropylidene)(2,2'-dimethylsilylene)(4-methylcyclopentadienyl)(3',5'-diphenylcyclopentadienyl)-zirconium dichloride, (1,1'-isopropylidene)(2,2'-dimethylsilylene)(4-tert-butylcyclopentadienyl)(3',5'-dimethylcyclopentadienyl)zirconium dichloride, (1,1'-isopropylidene)(2,2'-dimethylsilylene)(4-phenylcyclopentadienyl)(3',5'-dimethylcyclopentadienyl)-zirconium dichloride, (1,1'-isopropylidene) (2,2'-dimethylsilylene)(cyclopentadienyl)(3',4'-dimethylcyclopentadienyl)zirconium dichloride, (1,1'-isopropylidene) (2,2'-dimethylsilylene)(cyclopentadienyl)(3',4'-diisobutylcyclopentadienyl)zirconium dichloride, (1,1'-isopropylidene)(2,2'-dimethylsilylene)(3,4-dimethylcyclopentadienyl)(3',5'-diphenylcyclopentadienyl)-zirconium dichloride, (1,1'-isopropylidene)(2,2'-dimethylsilylene)(3,4-dimethylcyclopentadienyl)(3',5'-diisopropylcyclopentadienyl)zirconium dichloride, (1,1'-isopropylidene)(2,2'-dimethylsilylene)(3,4-dimethylcyclopentadienyl)(3',5'-diphenylcyclopentadienyl)-zirconium dichloride, (2,2'-isopropylidene)(1,1'-dimethylsilylene)(cyclopentadienyl)(indenyl)zirconium dichloride,
(ethylene)(dimethylsilylene)bis(cyclopentadienyl)zirconium dichloride, (2,2'-ethylene)(1,1'-dimethylsilylene)bis(indenyl)zirconium dichloride,
(1,2'-ethylene)(2,1'-dimethylsilylene)bis(indenyl)zirconium dichloride, bis(isopropylidene)bis(cyclopentadienyl)-zirconium dichloride,
ethylene(isopropylidene)bis(cyclopentadienyl)zirconium dichloride, bis(ethylene)bis(cyclopentadienyl)zirconium dichloride,
(isopropylidene)(dimethylgermylene)bis(cyclopentadienyl)-zirconium dichloride, (1,2'-ethylene) (2,1'-ethylene)bis(indenyl)zirconium dichloride, (1,2'-ethylene)(2,1'-ethylene)bis(3-normal-butylindenyl)zirconium dichloride, and (1,2'-ethylene) (2,1'-ethylene)bis(3-trimethylsilylmethylindenyl)zirconium dichloride.

Examples of hafnium compounds having the aforementioned specific structure include
(isopropylidene)(dimethylsilylene)bis(cyclopentadienyl)-hafnium dichloride,
(isopropylidene)(dimethylsilylene)bis(cyclopentadienyl)-hafnium(dimethyl),
(isopropylidene)(dimethylsilylene)bis(cyclopentadienyl)-hafnium(dibenzyl),
(isopropylidene)(dimethylsilylene)bis(cyclopentadienyl)-hafnium(diphenyl),
(isopropylidene)(dimethylsilylene)bis(cyclopentadienyl)-hafnium dimethoxide,
(isopropylidene)(dimethylsilylene)bis(cyclopentadienyl)-hafnium diphenoxide,
(isopropylidene)(dimethylsilylene)bis(cyclopentadienyl)-hafnium bis(trimethylsilyl),
(isopropylidene)(dimethylsilylene)bis(cyclopentadienyl)-hafnium bis(trimethylsilylmethyl),
(isopropylidene)(dimethylsilylene)bis(cyclopentadienyl)-hafnium bis(trifluoromethanesulfonate),
(isopropylidene)(dimethylsilylene)bis(cyclopentadienyl)-hafnium dihydride,
(isopropylidene)(dimethylsilylene)bis(cyclopentadienyl)-hafnium chloride hydride,
(isopropylidene)(dimethylsilylene)bis(cyclopentadienyl)-hafnium chloride methoxide, (1,1'-isopropylidene)(2,2'-dimethylsilylene)bis(4-methylcyclopentadienyl)hafnium dichloride, (1,1'-isopropylidene)(2,2'-dimethylsilylene)bis(3,5-dimethylcyclopentadienyl)hafnium dichloride, (1,1'-isopropylidene)(2,2'-dimethylsilylene)bis(3,4,5-trimethylcyclopentadienyl)hafnium dichloride, (1,1'-isopropylidene)(2,2'-dimethylsilylene)bis(3,4-dimethylcyclopentadienyl)hafnium dichloride, (1,1'-isopropylidene)(2,2'-dimethylsilylene)bis(3,4-diethylcyclopentadienyl)hafnium dichloride, (1,1'-isopropylidene)(2,2'-dimethylsilylene)bis(3,4-diisopropylcyclopentadienyl)hafnium dichloride, (1,1'-isopropylidene)(2,2'-dimethylsilylene)bis(3,4-di-n-butylcyclopentadienyl)hafnium dichloride, (1,1'-isopropylidene)(2,2'-dimethylsilylene)bis(3,4-di-tert-butylcyclopentadienyl)-hafnium dichloride, (1,1'-isopropylidene)(2,2'-dimethylsilylene)bis(3,4-diphenylcyclopentadienyl)hafnium dichloride, (1,1'-isopropylidene)(2,2'-dimethylsilylene)bis(3,4-dibenzylcyclopentadienyl)hafnium dichloride, (2,2'-isopropylidene) (1,1'-dimethylsilylene)bis(indenyl)hafnium dichloride, (1,2'-isopropylidene)(2,1'-dimethylsilylene)bis(indenyl)hafnium dichloride, (2,2'-isopropylidene)(1,1'-dimethylsilylene)bis(tetrahydroindenyl)hafnium dichloride, (2,2'-isopropylidene)(1,1'-dimethylsilylene)bis(3-methylindenyl)hafnium dichloride, (2,2'-isopropylidene)(1,1'-dimethylsilylene)bis(3-isopropylindenyl)hafnium dichloride, (2,2'-isopropylidene)(1,1'-dimethylsilylene)bis(3-n-butylindenyl)hafnium dichloride, (2,2'-isopropylidene)(1,1'-dimethylsilylene)bis(3-tert-butylindenyl)hafnium dichloride, (2,2'-isopropylidene)(1,1'-dimethylsilylene)bis(3-phenylindenyl)hafnium dichloride, (2,2'-isopropylidene)(1,1'-dimethylsilylene)bis(3-benzylindenyl)hafnium dichloride, (2,2'-isopropylidene)(1,1'-dimethylsilylene)bis(4,7-dimethylindenyl)hafnium dichloride, (2,2'-isopropylidene)(1,1'-dimethylsilylene)bis(3,4,7-trimethylindenyl)hafnium dichloride, (2,2'-isopropylidene)(1,1'-dimethylsilylene)bis(5,6-dimethylindenyl)hafnium dichloride, (2,2'-isopropylidene)(1,1'-dimethylsilylene)bis(4-phenylindenyl)-hafnium dichloride, (2,2'-isopropylidene)(1,1'-dimethylsilylene)bis (5-phenylindenyl)hafnium dichloride, (2,2'-isopropylidene)(1,1'-dimethylsilylene)bis(6-phenylindenyl)hafnium dichloride, (2,2'-isopropylidene)(1,1'-dimethylsilylene)bis(4-phenyl-7-methylindenyl)hafnium dichloride, (2,2'-isopropylidene)(1,1'-dimethylsillene)bis(4,5-benzoindenyl)hafnium dichloride, (2,2'-isopropylidene)(1,1'-dimethylsilylene)bis(5,6-benzoindenyl)hafnium dichloride, (2,2'-isopropylidene)(1,1'-dimethylsilylene)bis(6,7-benzoindenyl)hafnium dichloride, (1,1'-isopropylidene)(2,2'-dimethylsilylene)(4-methylcyclopentadienyl)(3',5'-dimethylcyclopentadienyl)-hafnium dichloride, (1,1'-isopropylidene)(2,2'-dimethylsilylene)(4-methylcyclopentadienyl)(3',5'-diisopropylcyclopentadienyl)hafnium dichloride, (1,1'-isopropylidene) (2,2'-dimethylsilylene) (4-methylcyclopentadienyl)(3',5'-diphenylcyclopentadienyl)-hafnium dichloride, (1,1'-isopropylidene)(2,2'-dimethylsilylene)(4-tert-butylcyclopentadienyl)(3',5'-dimethylcyclopentadienyl)hafnium dichloride, (1,1'-isopropylidene)(2,2'-dimethylsilylene)(4-phenylcyclopentadienyl)(3',5'-dimethylcyclopentadienyl)-hafnium dichloride, (1,1'-isopropylidene)(2,2'-dimethylsilylene)(cyclopentadienyl)(3',4'-dimethylcyclopentadienyl)hafnium dichloride, (1,1'-isopropylidene) (2,2'-dimethylsilylene)(cyclopentadienyl)(3',4'-diisobutylcyclopentadienyl)hafnium dichloride, (1,1'-isopropylidene)(2,2'-dimethylsilylene)(3,4-dimethylcyclopentadienyl)(3',5'-diphenylcyclopentadienyl)-hafnium dichloride, (1,1'-isopropylidene)(2,2'-dimethylsilylene)(3,4-dimethylcyclopentadienyl)(3',5'-diisopropylcyclopentadienyl)hafnium dichloride, (1,1'-isopropylidene)(2,2'-dimethylsilylene)(3,4-dimethylcyclopentadienyl) (3', 5' -diphenylcyclopentadienyl)-hafnium dichloride, (2,2'-isopropylidene)(1,1'-dimethylsilylene)(cyclopentadienyl)(indenyl)hafnium dichloride,
(ethylene)(dimethylsilylene)bis(cyclopentadienyl)hafnium dichloride, (2,2'-ethylene)(1,1'-dimethylsilylene)bis(indenyl)hafnium dichloride, (1,2'-ethylene)(2,1'-dimethylsilylene)bis(indenyl)hafnium dichloride, bis(isopropylidene)bis(cyclopentadienyl)hafnium dichloride, ethylene(isopropylidene)bis(cyclopentadienyl)-hafnium dichloride, bis(ethylene)bis(cyclopentadienyl)-hafnium dichloride,
(isopropylidene)(dimethylgermylene)bis(cyclopentadienyl)-hafnium dichloride, (1,2'-ethylene) (2,1'-ethylene)bis(indenyl)hafnium dichloride, (1,2'-ethylene)(2,1'-ethylene)bis(3-normal-butylindenyl)hafnium dichloride, and (1,2'-ethylene)(2,1'-ethylene)bis(3-trimethylsilylmethylindenyl)hafnium dichloride.

In addition to the aforementioned chlorides, the corresponding bromides or iodides, formed through substitution of a chlorine atom by a bromine atom or an iodine atom, may also be used. These transition metal compounds may be used singly or in combination of two or more species.

Regarding the co-catalyst of the component (B) of the present invention, there can be used an oxygen-containing organometallic compound (b-1); a compound which reacts with the aforementioned transition metal compound (A), to thereby form an ionic complex (b-2); or clay, clay mineral, or an ion-exchangeable compound of layer structure (b-3).

Examples of the oxygen-containing organometallic compound (b-1) which is preferably used in the present invention include compounds represented by the following formula (II) or (III): 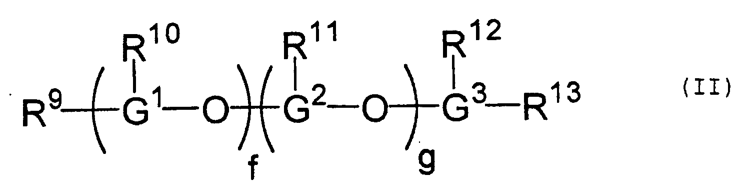 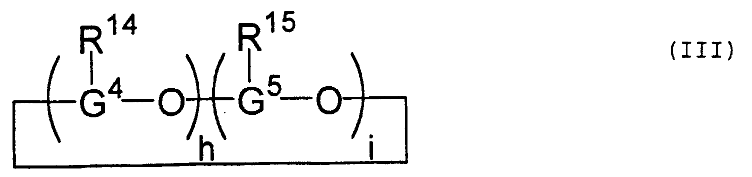 wherein each of R⁹ to R¹⁵ represents a C1-C8 alkyl group; each of G¹ to G⁵ represents a Group 13 metallic element; each of "f" to "i" is a number of 0-50; and (f + g) and (h + i) are both 1 or more.

When any of R⁹ to R¹⁵ is a C1-C8 alkyl group, examples thereof include a methyl group, an ethyl group, an n-propyl group, an isopropyl group, an n-butyl group, an isobutyl group, a tert-butyl group, an n-pentyl group, an isopentyl group, a tert-pentyl group, a neopentyl group, an n-hexyl group, an isohexyl group, a tert-hexyl group, a neohexyl group, an n-heptyl group, an isoheptyl group, a tert-heptyl group, a neoheptyl group, an n-octyl group, an isoctyl group, a tert-octyl group, and a neoctyl group. When any of G¹ to G⁵ is a Group 13 metallic element, examples thereof include boron, aluminum, gallium, indium, and thallium, with boron and aluminum being particularly preferably used. Each of "f" to "i" is 1-20, with 1-5 being particularly preferred.

Examples of the oxygen-containing compounds represented by formula (II) or (III) include aluminoxanes such as tetramethyldialminoxane, tetra(isobutyl)dialuminoxane, methylaluminoxane, ethylaluminoxane, butylaluminoxane, and isobutylaluminoxane and boroxanes such as trimethylboroxane and methylboroxane. Of these, aluminoxanes are preferably used, with methylaluminoxane and isobutylaluminoxane being particularly preferred.

These aluminoxanes may be modified with alcohol. Examples of alcohol to be used for modification include methanol, ethanol, propanol, butanol, triphenylmethanol, 2,6-dimethylphenol, 2,4,6-trimethylphenol, 2,6-diisopropylphenol, 2, 6-diisopropyl-4-methylphenol, pentafluorophenol, 4-trifluoromethylphenol, 3,5-bis(trifluoromethyl)phenol, 1,4-butanediol, catechol, trimethylsilanol, and triphenylsilanol.

Regarding the compound which reacts with the aforementioned transition metal compound (A), to thereby form an ionic complex (b-2), there is preferably used a coordination compound formed of an anion and a cation in which a plurality of groups are linked to a metallic atom or a Lewis acid.

Examples of preferred coordination compounds include compounds represented by the following formula (IV) or (V):

([J¹-H]^{c+})_{d}([Q¹Z¹Z²···Z^{p}]^{(p-q)-})ₑ (IV)

([J²]^{c+})_{d}([Q²Z¹Z² ··· Z^{p}]^{(p-q)-})ₑ (V)

wherein J¹ represents a Lewis base; J² represents the below-mentioned Q³, R¹⁶R¹⁷Q⁴, or R¹⁸₃C; each of Q¹ and Q² is a metal selected from among the elements belonging to Groups 5 to 15; Q³ is a metal selected from among the elements belonging to Group 1 and Groups 8 to 12; Q⁴ is a metal selected from among the elements belonging to Groups 8 to 10; each of Z¹ to Z^{p} represents a hydrogen atom, a dialkylamino group, an alkoxy group, an aryloxy group, a C1-C20 alkyl group, a C6-C20 aryl group, an alkylaryl group, an arylalkyl group, a substituted alkyl group, an organic metalloid group, or a halogen atom; each of R¹⁶ and R¹⁷ represents a cyclopentadienyl group, a substituted cyclopentadienyl group, an indenyl group, or a fluorenyl group; R¹⁸ represents an alkyl group; q is a valence of Q¹ or Q² and an integer of 1-7; p is an interger of 2-8; c is an ion valance of [J¹-H] or [J²] and an integer of 1-7; d is an integer of 1 or more; and e is a value calculated from [c × d/(p-q)].

Examples of preferred metal elements represented by Q¹ in formula (IV) or Q² in formula (V) include boron, aluminum, silicon, phosphorus, arsenic, and antimony. Examples of preferred metal elements represented by Q³ include silver, copper, sodium, and lithium. Examples of preferred metal elements represented by Q⁴ include iron, cobalt, and nickel.

In Z¹ to Z^{p}, examples of preferred dialkylamino groups include a dimethylamino group and a diethylamino group; examples of preferred alkoxy groups include a methoxy group, an ethoxy group, and an n-butoxy group; and examples of preferred aryloxy groups include a phenoxy group, a 2,6-dimethylphenoxy group, and a naphthyloxy group. Examples of preferred C1-C20 alkyl groups include a methyl group, an ethyl group, an n-propyl group, an isopropyl group, an n-butyl group, an n-octyl group, and a 2-ethylhexyl group; and examples of preferred C6-C20 aryl groups, alkylaryl groups, or arylalkyl groups include a phenyl group, a p-tolyl group, a benzyl group, a pentafluorophenyl group, a 3,5-bis(trifluoromethyl)phenyl group, a 4-tert-butylphenyl group, a 2,6-dimethylphenyl group, a 3,5-dimethylphenyl group, a 2,4-dimethylphenyl group, and a 2,3-dimethylphenyl group. Examples of preferred halogen atoms include a fluorine atom, a chlorine atom, a bromine atom, and an iodine atom; and examples of preferred organic metalloid groups include a pentamethylantimony group, a trimethylsilyl group, a trimethylgermyl group, a diphenylarsine group, a dicyclohexylantimony group, and a diphenylboron group.

When any of R¹⁶ and R¹⁷ is a substituted cyclopentadienyl group, examples of preferred species thereof include a methylcyclopentadienyl group, a butylcyclopentadienyl group, and a pentamethylcyclopentadienyl group.

Examples of the anion in which a plurality of groups are linked to a metallic atom include B(C₆F₅)₄⁻, B(C₆HF₄)₄⁻, B(C₆H₂F₃)₄⁻, B(C₆H₃F₂)₄⁻, B(C₆H₄F)₄⁻, B[(C₆(CF₃)F₄]₄⁻, B(C₆H₅)₄⁻, FB(C₆F₅)₃⁻, FB(C₁₀F₇)₃⁻, PF₆⁻, P(C₆F₅)₆⁻, Al(C₆F₅)₄⁻, Al(C₆HF₄)₄⁻, FAl(C₆F₅)₃⁻, and FAl(C₁₀F₇)₃⁻.

Examples of the cation in which a plurality of groups are linked to a metallic atom include (C₅H₅)₂Fe⁺, [(CH₃)C₅H₄]₂Fe⁺, [[(CH₃)₃C]C₅H₄]₂Fe⁺, [(CH₃)₂C₅H₃]₂Fe⁺, [(CH₃)₃C₅H₂]₂Fe⁺, [(CH₃)₄C₅H]₂Fe⁺, [(CH₃)₅C₅]₂Fe⁺, Ag⁺, Na⁺, and Li⁺. Other examples of the cation include nitrogen-containing compounds such as pyridinium, 2,4-dinitro-N,N-diethylanilinium, diphenylammonium, p-nitroanilinium, 2,5-dichloroanilinium, p-nitro-N,N-dimethylanilinium, quinolinium, N,N-dimethylanilinium, and N,N-diethylanilinium; carbenium compounds such as triphenylcarbenium, tri(4-methylphenyl)carbenium, and tri(4-methoxyphenyl)carbenium; alkylphosphonium ions such as CH₃PH₃⁺, C₂H₅PH₃⁺, C₃H₇PH₃⁺, (CH₃)₂PH₂⁺, (C₃H₅)₂PH₂⁺, (C₃H₇)₂PH₂⁺, (CH₃)₃PH⁺, (C₂H₅)₃PH⁺, (C₃H₇)₃PH⁺, (CF₃)₃PH⁺, (CH₃)₄P⁺, (C₂H₅)₄P⁺, and (C₃H₇)₄P⁺; and arylphosphonium ions such as C₆H₅PH₃⁺, (C₆H₅)₂PH₂⁺, (C₆H₅)₃PH⁺, (C₆H₅)₄P⁺, (C₂H₅)₂(C₆H₅)PH⁺, (CH₃) (C₆H₅)PH₂⁺, (CH₃)₂(C₆H₅)PH⁺, and (C₂H₅)₂(C₆H₅)₂P⁺.

Examples of the aforementioned compounds represented by formula (IV) include triethylammonium tetraphenylborate, tri(n-butyl)ammonium tetraphenylborate, trimethylammonium tetraphenylborate, triethylammonium tetrakis(pentafluorophenyl)borate, tri(n-butyl)ammonium tetrakis(pentafluorophenyl)borate, triethylammonium hexafluoroarsenate, pyridinium tetrakis(pentafluorophenyl)borate, pyrrolinium tetrakis(pentafluorophenyl)borate, N,N-dimethylanilinium tetrakis(pentafluorophenyl)borate, and methyldiphenylammonium tetrakis(pentafluorophenyl)borate.

Examples of the aforementioned compounds represented by formula (V) include ferrocenium tetraphenylborate, ferrocenium tetrakis(pentafluorophenyl)borate, dimethylferrocenium tetrakis(pentafluorophenyl)borate, decamethylferrocenium tetrakis(pentafluorophenyl)borate, acetylferrocenium tetrakis(pentafluorophenyl)borate, formylferrocenium tetrakis(pentafluorophenyl)borate, cyanoferrocenium tetrakis(pentafluorophenyl)borate, silver tetraphenylborate, silver tetrakis(pentafluorophenyl)borate, trityl tetraphenylborate, trityl tetrakis(pentafluorophenyl)borate, silver hexafluoroarsenate, silver hexafluoroantimonate, and silver tetrafluoroborate.

Examples of the aforementioned Lewis acids include B(C₆F₅)₃, B(C₆HF₄)₃, B(C₆H₂F₃)₃, B (C₆H₃F₂)₃, B(C₆H₄F)₃, B(C₆H₅)₃, BF₃, B[C₆(CF₃)F₄]₃, B(C₁₀F₇)₃, FB(C₆F₅)₂, PF₅, P(C₆F₅)₅, Al(C₆F₅)₃, Al(C₆HF₄)₃, and Al(C₁₀F₇)₃.

Regarding the clay, clay mineral, or ion-exchangeable compound of layer structure (b-3), the following substances are employed.

In the present invention, the term "clay" refers to a substance which is formed of a mass of silicate hydrate mineral particles; exhibits plasticity when kneaded with water added in an appropriate amount; exhibits toughness when dried; and can be sintered through firing at high temperature. The term "clay mineral" refers to a silicate hydrate which is a predominant component of clay. The clay and clay mineral may be naturally occurring products or artificially synthesized products.

Examples of the clay and clay mineral include clay of low montmorillonite content-called bentonite; clay containing montmorillonite and a large amount of other components, e.g., kibushi clay or gairome clay; clay of fibrous foam, e.g., sepiolite or palygorskite; and amorphous or low-crystallinity clay, e.g., allophane or imogolite.

In the present invention, the term "ion-exchangeable compound of layer structure" refers to a compound having a crystal structure in which component planes are stacked in parallel via weak bond force such as ionic bonding, wherein ions contained therein are ion-exchangeable. Some clay mineral species are ion-exchangeable compounds of layer structure, and examples thereof include phyllosilicic acid species such as phyllosilicic acid and phyllosilicate salts. Examples of phyllosilicate salts include, among those of natural origin, montmorillonite, saponite, and hectorite belonging to the smectite group; illite and sericite belonging to the mica group; smectite-mica interstratified mineral; and mica-vermiculite interstratified mineral. Examples of synthetic products include fluorotetrasilicon mica, Laponite, and Sumecton. Other than clay mineral, examples of ion-exchangeable compounds include compounds of ionic crystal having a layer crystal structure such as α-Zr(HPO₄)₂, γ-Zr(HPO₄)₂, α-Ti(HPO₄)₂, and γ-Ti(HPO₄)₂. Examples of these ion-exchangeable compounds of layer structure include compounds of ionic crystal having a layer crystal structure; e.g., hexagonal close-packed type, antimony type, cadmium chloride type, or cadmium iodide type.

Among the aforementioned components (b-3); i.e., clay, clay mineral, and ion-exchangeable compounds of layer structure, particularly preferred are clay mineral species such as kaoline mineral, serpentine and similar minerals, pyrophyllite, talc, mica-clay mineral, chlorite, vermiculite, smectite, interstratified mineral, sepiolite, palygorskite, allophane, imogolite, kibushi clay, gairome clay, hisingerite, and nacrite. A more preferable component is smectite. Of these, species of montmorillonite, saponite, and hectorite are suitably used.

When any of the above-mentioned clay, clay mineral, or ion-exchangeable compounds of layer structure is employed as the co-catalyst of component (B) of the present invention, the species which has been subjected to chemical treatment and further treatment with an organic silane compound or similar substance is preferably used.

Examples of the chemical treatment which may be employed include acid treatment, alkali treatment, salt treatment, and organic substance treatment. When acid treatment is performed, an acid such as hydrochloric acid or sulfuric acid is preferably used. Through the acid treatment, surface impurities can be removed, and cations such as aluminum ions, iron ions, and magnesium ions contained in the crystal structure of the clay are eluted out, to thereby increase surface area. When alkali treatment is performed, an alkali such as an aqueous solution of sodium hydroxide or aqueous ammonia is preferably used. Through the treatment, the crystal structure of the clay can be changed into a preferred state. When salt treatment is performed, a salt such as magnesium chloride or aluminum chloride is used. When the organic substance treatment is performed, an organic aluminum or silane compound, or an ammonium salt is preferably used. Through the salt treatment or organic substance treatment, an ion complex, a molecular complex, or a complex of an organic substance is formed, to thereby change the surface area, interlayer distance, etc. into a preferable state. For example, by substituting changeable ions included in an interlayer space by other bulky ions based on ion-changeability, an intercalation substance maintaining the expanded interlayer space can be obtained. In this case, the clay serving as a raw material may be subjected to chemical treatment as is. Alternatively, clay which has adsorbed further added water or which has been subjected to heat dehydration in advance may also be used.

The thus-chemically-treated clay is further treated with an organic silane compound or a similar compound. Examples of preferred organic silane compounds suitable for the treatment include trialkylsilyl chlorides such as trimethylsilyl chloride, triethylsilyl chloride, triisopropylsilyl chloride, tert-butyldimethylsilyl chloride, tert-butyldiphenylsilyl chloride, and phenethyldimethylsilyl chloride; dialkylsilyl dichlorides such as dimethylsilyl dichloride, diethylsilyl dichloride, diisopropylsilyl dichloride, bisdiphenethylsilyl dichloride, methylphenethylsilyl dichloride, diphenylsilyl dichloride, dimesitylsilyl dichloride, and ditolylsilyl dichloride; alkylsilyl trichlorides such as methylsilyl trichloride, ethylsilyl trichloride, isopropylsilyl trichloride, phenylsilyl trichloride, mesitylsilyl trichloride, tolylsilyl trichloride, and phenethylsilyl trichloride; halides obtained by substituting the above chloride moiety(ies) by another halogen element; silylamines such as bis(trimethylsilyl)amine, bis(triethylsilyl)amine, bis (triisopropylsilyl)amine, bis(dimethylethylsilyl)amine, bis(diethylmethylsilyl)amine, bis(dimethylphenylsilyl)amine, bis(dimethyltolylsilyl)amine, bis (dimethylmesitylsilyl)amine, N,N-dimethylaminotrimethylsilane, (diethylamino)trimethylsilane, and N-(trimethylsilyl)imidazole; polysilanols such as peralkylpolysiloxypolyol (non-proprietary name); silanols such as tris(trimethylsiloxy)silanol; silylamides such as N,O-bis(trimethylsilyl)acetamide,
bis(trimethylsilyl)trifluoroacetamide, N-(trimethylsilyl)acetamide, bis(trimethylsilyl) urea, and trimethylsilyldiphenyl urea; linear-chain siloxanes such as 1,3-dichlorotetramethyldisiloxane; cyclic siloxanes such as pentamethylcyclopentanesiloxane; tetraalkylsilanes such as dimethyldiphenylsilane, diethyldiphenylsilane, and diisopropyldiphenylsilane; and trialkylsilanes such as trimethylsilane, triethylsilane, triisopropylsilane, tri-t-butylsilane, triphenylsilane, tritolylsilane, trimesitylsilane, methyldiphenylsilane, dinaphtylmethylsilane, and bis(diphenyl)methylsilane.

Among these organic silane compounds, those having at least one alkyl group directly linked to a silicon atom are preferred. For example, alkylsilyl halides, *inter alia,* dialkylsilyl halides are suitably used. These organic silane compounds may be used singly or in combination of two or more species.

When the aforementioned clay is treated by use of any of these organic silane compounds, the treatment by use of the organic silane compound is effectively performed in the presence of water. In this case, water destroys the crystal structure (particularly stacked layer structure) of the clay, to thereby enhance efficiency of contact between the organic silane compound and clay. In other words, water expands the interlayer space in the crystal structure of the clay, to thereby promote diffusion of the organic silane compound into the stacked layer crystal structure. Thus, the presence of water is important for performing the treatment of the clay by use of the organic silane compound, and an increased amount of water is advantageous. Water is added in an amount of 1 mass % or more based on the dry mass of the clay serving as a raw material, preferably 10 mass % or more, more preferably 100 mass % or more. The dry mass of the clay serving as a raw material is defined as the mass of dried clay which has been obtained by placing the raw material in a muffle furnace, elevating the temperature to 150°C over 30 minutes, and maintaining at 150°C for one hour.

If water originally contained in the clay raw material is utilized, the operation of the treatment is easier. When water is further added, the clay may be suspended in water or a water-organic solvent mixture. Examples of the organic solvent which may be used include alcohol, ester, ether, halohydrocarbon, aliphatic hydrocarbon, and aromatic hydrocarbon.

Although the contact treatment of the clay with the organic silane compound may be performed in air, treatment in the flow of an inert gas such as argon or nitrogen is more preferred. The amount of the organic silane compound used in the treatment is 0.001-1,000 mol (as reduced to silicon atom) based on 1 kg of the clay, preferably 0.01-100.

The aforementioned components (b-1), (b-2), and (b-3) may be used singly or in combination of two or more components.

The catalyst to be used in the present invention contains as essential components the aforementioned transition metal compound serving as component (A) and the co-catalyst serving as component (B). Alternatively, such a catalyst further containing an alkylating agent serving as component (C) may also be employed. Examples of the alkylating agent include organic aluminum compounds, organic magnesium compounds, and organic zinc compounds, with organic aluminum compounds being particularly preferred.

Examples of the organic aluminum compounds include trialkylaluminum compounds such as trimethylaluminum, triethylaluminum, tri-n-propylaluminum, triisopropylaluminum, tri-n-butylaluminum, triisobutylaluminum, and tri-t-butylaluminum; dialkylaluminum halides such as dimethylaluminum chloride, diethylaluminum chloride, di-n-propylaluminum chloride, diisopropylaluminum chloride, di-n-butylaluminum chloride, diisobutylaluminum chloride, and di-t-butylaluminum chloride; dialkylaluminum alkoxides such as dimethylaluminum methoxide and dimethylaluminum ethoxide; dialkylaluminum hydrides such as dimethylaluminum hydride, diethylaluminum hydride, and diisobutylaluminumhydride. Of these, trialkylaluminum compounds are preferred.

Examples of the organic magnesium compounds include , dimethylmagnesium, diethylmagnesium, di-n-propylmagnesium, and diisopropylmagnesium. Examples of the organic zinc compounds include dimethylzinc, diethylzinc, di-n-propylethylzinc, and diisopropylzinc.

The proportions of the aforementioned components (A), (B), and (C) to be mixed together will be described. When component (b-1) is used, the ratio by mol of (b-1) to component (A) (transition metal compound) is 1 : 0.1 to 1 : 100,000, preferably 1 : 0.5 to 1 : 10,000. When component (b-2) is used, the mol ratio is 1 : 0.1 to 1 : 1,000, preferably 1 : 1 to 1 : 100. When component (b-3) is used, the amount of component (A) to be added based on the unit weight (g) of component (b-3) 0.1 to 1000 µmol, preferably 1 to 200 µmol. Furthermore, the ratio by mol of component (C) to component (A) (organic transition metal compound) is 1 : 1 to 1 : 100,000, preferably 1 : 10 to 1 : 10,000.

Upon preparation of a catalyst from the aforementioned catalyst components, the contact operation is preferably performed under an inert gas such as nitrogen. Catalysts which have been prepared from these catalyst components in advance in a catalyst preparation tank may be used. Alternatively, catalysts prepared in a polymerization reactor for carrying out copolymerization of monomers such as α-olefin and aromatic vinyl compound may be used, without further treatment, for copolymerization.

In the method of the present invention for producing an α-olefin - aromatic vinyl compound copolymer, the polymerization catalyst obtained in the aforementioned manner is used, to thereby produce an α-olefin - aromatic vinyl compound copolymer, or through further addition of a cyclic olefin and/or diene thereto, a terpolymer or four-component copolymer.

Examples of α-olefins preferably used for producing these copolymers include ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, and 3,4-dichloro-1-butene. Of these, ethylene, propylene, 1-butene, 1-hexene, and 1-octene are particularly preferred.

Examples of preferred aromatic vinyl compounds include alkylstyrenes such as styrene, p-methylstyrene, p-ethylstylene, p-propylstyrene, p-isopropylstyrene, p-butylstyrene, p-tert-butylstyrene, o-methylstyrene, o-ethylstyrene, o-propylstyrene, o-isopropylstyrene, m-methylstyrene, m-ethylstyrene, m-propylstyrene, m-isopropylstyrene, m-butylstyrene, mesitylstyrene, 2,4-dimethylstyrene, 2,5-dimethylstyrene, and 3,5-dimethylstyrene; alkoxystyrenes such as p-methoxystyrene, o-methoxystyrene, and m-methoxystyrene; halostyrenes such as p-chlorostyrene, m-chlorostyrene, o-chlorostyrene, p-bromostyrene, m-bromostyrene, o-bromostyrene, p-fluorostyrene, m-fluorostyrene, o-fluorostyrene, and o-methyl-p-fluorostyrene; p-phenylstyrene; trimethylsilylstyrene; vinyl benzoate; and divinylbenzene. Of these, styrene, p-methylstyrene, p-ethylstyrene, p-tert-butylstyrene, p-phenylstyrene, trimethylsilylstyrene, and divinylbenzene are particularly preferred. These aromatic vinyl compounds may be used singly or in combination of two or more species.

Examples of preferred cyclic olefins include cyclopentene, cyclohexene, norbornene, 1-methylnorbornene, 5-methylnorbornene, 7-methylnorbornene, 5-ethylnorbornene, 5-propylnorbornene, 5-phenylnorbornene, 5-benzylnorbornene, 5,6-dimethylnorbornene, and 5,5,6-trimethylnorbornene. Of these, cyclopentene and norbornene are particularly preferred.

Examples of dienes include 1,3-butadiene, 1,4-pentadiene, and 1,5-hexadiene, with 1,5-hexadiene being particularly preferred.

These α-olefines, aromatic vinyl compounds, cyclic olefins, and dienes may be used singly or in combination of two or more species.

Regarding the mode of polymerization for producing these α-olefin - aromatic vinyl compound copolymers, bulk polymerization or solution polymerization is preferably employed. Examples of the solvent for use in solution polymerization include aliphatic hydrocarbons such as butane, pentane, and hexane; alicyclic hydrocarbons such as cyclohexane; aromatic hydrocarbons such as benzene, toluene, and xylene; and liquefied α-olefins. No particular limitation is imposed on the polymerization temperature, and the polymerization can be performed at generally -50 to 250°C, preferably 0-200°C. The pressure during polymerization is ambient pressure to 20 MPa, preferably ambient pressure to 10 MPa.

Upon co-polymerization of the aforementioned α-olefin, aromatic vinyl compound, and additional cyclic olefin and/or diene, a chain-transfer agent serving as component (D) may be used together with the aforementioned catalyst. Examples of suitably used chain-transfer agents include silanes such as silane, phenylsilane, methylsilane, ethylsilane, butylsilane, octylsilane, diphenylsilane, dimethylsilane, diethylsilane, dibutylsilane, and dioctylsilane; and hydrogen, with hydrogen being particularly preferred. These species may be used singly or in combination of two or more species.

The α-olefin - aromatic vinyl compound copolymers which can be produced in the aforementioned manner include ethylene - styrene copolymer, propylene - styrene copolymer, and butene-1 - styrene copolymer. In a polymer chain of the α-olefin - aromatic vinyl compound copolymer, the ratio of the number of structural units derived from α-olefin residue to that of structural units derived from the aromatic vinyl compound can be controlled to an arbitrary value. However, when the aromatic vinyl compound-derived residue content is controlled to 0.1-50 mol% or less, a high-utility copolymer exhibiting high elastic recovery can be obtained. In contrast, when the aromatic vinyl compound-derived residue content is less than 0.1, the copolymer fails to have soft-resin characteristics.

The α-olefin - aromatic vinyl compound - cyclic olefin (or diene) terpolymers include ethylene - styrene - norbornene copolymer, propylene - styrene - butadiene copolymer, and ethylene- styrene - 1,5-hexadiene copolymer. In a polymer chain of the α-olefin - aromatic vinyl compound - cyclic olefin copolymer or the α-olefin - aromatic vinyl compound - diene copolymer, the proportions among the number of structural units derived from α-olefin residue, that of structural units derived from the aromatic vinyl compound, and that of structural units derived from the cyclic olefin or diene can be controlled to an arbitrary value. However, particularly when the aromatic vinyl compound-derived residue content is controlled to 0.1-30 mol% or less and the cyclic olefin-derived or diene-derived residue content is controlled to 0.1-20 mol% or less, a high-utility copolymer exhibiting high elastic recovery can be obtained. In contrast, when the aromatic vinyl compound-derived residue content and the cyclic olefin-derived or diene-derived residue content are less than 0.1, the copolymer fails to have soft-resin characteristics.

The present invention will next be described in more detail by way of examples and comparative examples.

### [Example 1]

Into an autoclave (internal volume of 1.6 L) equipped with a catalyst-introduction pipe, toluene (180 mL), styrene (200 mL), and a solution (1.0 M, 1.0 mL) of triisobutylaluminum in toluene serving as catalyst component (C) were sequentially charged. The temperature was elevated to 50°C.

Subsequently, ethylene was introduced into the autoclave until the partial pressure thereof reached 0.3 MPa. A solution of (2,2'-isopropylidene)(1,1'-dimethylsilylene)bis(indenyl)zirconium dichloride (10.0 µmol), serving as catalyst component (A), dissolved in toluene (20 mL) and methylaluminoxane (10.0 mmol) serving as catalyst component (B) were mixed, and the resultant mixture was introduced through the catalyst-introduction pipe.

Since the internal pressure of the autoclave decreased as the progress of co-polymerization of ethylene and styrene, ethylene was continuously introduced such that the partial pressure thereof could be maintained at 0.3 MPa, during which co-polymerization was performed over one hour. Thereafter, the co-polymerization was terminated by adding methanol.

A large amount of methanol was added to the reaction product, and the mixture was subjected to filtration, to thereby separate a solid. The separated solid was dried at 60°C for four hours under reduced pressure, to thereby yield 92.0 g (catalyst activity with respect to co-polymerization = 101 kg/g-Zr/hr) of ethylene - styrene copolymer.

¹H-NMR measurement of the thus-obtained copolymer revealed that the styrene residue-derived structural unit content of the copolymer was 5.5 mol%. ¹³C-NMR measurement confirmed that the copolymer included ethylene-styrene chain structure.

### [Example 2]

The procedure of Example 1 was repeated, except that hydrogen serving as a chain-transfer agent of component (D) was introduced at a partial pressure of 0.03 MPa together with ethylene serving as a raw material.

Thus, 104.3 g (catalyst activity with respect to co-polymerization = 114 kg/g-Zr/hr) of ethylene - styrene copolymer was obtained.

### [Example 3]

The procedure of Example 1 was repeated, except that a 1M solution (1.0 mL) of dimethylanilinium tetrakis(pentafluorophenyl)borate in toluene was used instead of methylaluminoxane employed as a co-catalyst of component (B) used in Example 1, to thereby yield 41.7 g (catalyst activity with respect to co-polymerization = 46 kg/g-Zr/hr) of ethylene - styrene copolymer.

¹H-NMR measurement of the thus-obtained copolymer revealed that the styrene residue-derived structural unit content of the copolymer was 8 mol%. ¹³C-NMR measurement confirmed that the copolymer included ethylene-styrene chain structure.

### [Example 4]

The procedure of Example 2 was repeated, except that (1,2'-ethylene)(1',2-ethylene)bis(3-normalbutylindenyl)zirconium dichloride (10.0 µmol) was used instead of catalyst component (A) employed in Example 2; hydrogen serving as a chain-transfer agent of component (D) was introduced at a partial pressure of 0.03 MPa; and the polymerization time was controlled to three minutes, to thereby yield 23.6 g (catalyst activity with respect to co-polymerization = 517 kg/g-Zr/hr) of ethylene - styrene copolymer.

¹H-NMR measurement of the thus-obtained copolymer revealed that the styrene residue-derived structural unit content of the copolymer was 1.5 mol%. ¹³C-NMR measurement confirmed that the copolymer included ethylene-styrene chain structure.

### [Example 5]

The procedure of Example 1 was repeated, except that (1,2'-ethylene)(1',2-ethylene)bis(3-trimethylsilylmethylindenyl)zirconium dichloride (10.0 µmol) was used instead of catalyst component (A) employed in Example 1; propylene was used as a raw material instead of ethylene; hydrogen serving as a chain-transfer agent of component (D) was introduced at a partial pressure of 0.03 MPa; and the polymerization time was controlled to 30 minutes, to thereby yield 19.8 g (catalyst activity with respect to co-polymerization = 145 kg/g-Zr/hr) of propylene - styrene copolymer.

GPC-FT/IR measurement revealed that the thus-produced copolymer had a mass average molecular weight of 14,500 (as reduced to polystyrene) and a molecular weight distribution of 1.8.

### [Example 6]

Into an autoclave (internal volume of 1.6 L) equipped with a catalyst-introduction pipe, toluene (180 mL), styrene (200 mL), 1-octene (20 mL) serving as a comonomer, and a solution (1.0 M, 1.0 mL) of triisobutylaluminum in toluene serving as catalyst component (C) were sequentially charged. The temperature was elevated to 50°C.

Subsequently, ethylene was introduced into the autoclave until the partial pressure thereof reached 0.3 MPa. A solution of (2,2'-isopropylidene)(1,1'-dimethylsilylene)bis(indenyl)zirconium dichloride (10.0 µmol), serving as catalyst component (A), dissolved in toluene (20 mL) and methylaluminoxane (10 mmol) serving as catalyst component (B) were mixed, and the resultant mixture was introduced through the catalyst-introduction pipe.

Since the internal pressure of the autoclave decreased as the progress of co-polymerization of ethylene and styrene, ethylene was continuously introduced such that the partial pressure thereof could be maintained at 0.3 MPa, during which co-polymerization was performed over one hour. Thereafter, the co-polymerization was terminated by adding methanol.

A large amount of methanol was added to the reaction product, and the mixture was subjected to filtration, to thereby separate a solid. The separated solid was dried at 60°C for four hours under reduced pressure, to thereby yield 92.3 g (catalyst activity with respect to co-polymerization = 101 kg/g-Zr/hr) of ethylene - styrene - octene copolymer.

¹H-NMR measurement of the thus-obtained copolymer revealed that the styrene residue-derived structural unit content of the copolymer was 4 mol% and the octene residue-derived structural unit content of the copolymer was 12 mol%. ¹³C-NMR measurement confirmed that the copolymer included ethylene-styrene-ethylene chain structure and ethylene-octene-ethylene chain structure.

### [Example 7]

Into an autoclave (internal volume of 1.6 L) equipped with a catalyst-introduction pipe, toluene (180 mL), styrene (200 mL), and a solution (1.0 M, 1.0 mL) of triisobutylaluminum in toluene serving as catalyst component (C) were sequentially charged. The temperature was elevated to 50°C.

Subsequently, into this autoclave, hydrogen serving as a chain-transfer agent of component (D) was introduced at a partial pressure of 0.05 MPa and propylene was introduced such that the partial pressure thereof attained 0.5 MPa. A solution of (1,2'-ethylene)(1',2-ethylene)bis(3-normalbutylindenyl)zirconium dichloride (10.0 µmol), serving as catalyst component (A), dissolved in toluene (20 mL) and methylaluminoxane (10.0 mmol) serving as catalyst component (B) were introduced into the autoclave.

Since the internal pressure of the autoclave decreased as the progress of co-polymerization of propylene and styrene, propylene was continuously introduced such that the partial pressure thereof could be maintained at 0.5 MPa, during which co-polymerization was performed over five minutes. Thereafter, the co-polymerization was terminated by adding methanol.

A large amount of methanol was added to the reaction product, and the mixture was subjected to filtration, to thereby separate a solid. The separated solid was dried at 60°C for four hours under reduced pressure, to thereby yield 33.4 g (catalyst activity with respect to co-polymerization = 879 kg/g-Zr/hr) of propylene - styrene copolymer.

GPC-FT/IR measurement revealed that the thus-produced copolymer had a mass average molecular weight of 16,800 (as reduced to polystyrene) and a molecular weight distribution of 2.0.

### [Comparative Example 1]

The procedure of Example 1 was repeated, except that a known transition metal compound catalyst component, bis(dimethylsilylene)bis(cyclopentadienyl)zirconium dichloride (10.0 µmol), was used instead of catalyst component (A) used in Example 1, to thereby yield 10.5 g (catalyst activity with respect to co-polymerization = 22 kg/g-Zr/hr) of ethylene - styrene copolymer.

GPC-FT/IR measurement revealed that the thus-produced copolymer had a mass average molecular weight of 16,400 (as reduced to polystyrene) and a molecular weight distribution of 2.0. ¹H-NMR measurement of the thus-obtained copolymer revealed that the styrene residue-derived structural unit content of the copolymer was 38 mol%. ¹³C-NMR measurement confirmed that the copolymer included an ethylene-styrene chain structure.

### Industrial Applicability

According to the method of the present invention, high catalyst activity with respect to co-polymerization of α-olefin, an aromatic vinyl compound, and an optional cyclic olefin or diene can be attained; the amount of aluminoxane or a boron compound serving as a co-catalyst can be reduced; and the amount of the catalyst remaining in the produced copolymer can be reduced. Thus, olefin - aromatic vinyl compound copolymers of high quality can be produced at high productivity.

## Claims

1. A method for producing an α-olefin - aromatic vinyl compound copolymer comprising copolymerizing an α-olefin and an aromatic vinyl compound in the presence of a copolymerization catalyst formed of a transition metal compound component (A) and a co-catalyst component (B) wherein the component (A) employs a transition metal compound having a chemical structure with a metallocene skeleton having two cross-linking groups wherein at least one of the cross-linking groups is a cross-linking group exclusively formed of a carbon-carbon bond cross-linking skeleton.

2. A method for producing an α-olefin - aromatic vinyl compound copolymer comprising copolymerizing an α-olefin, aromatic vinyl compound, a cyclic olefin, and/or a diene in the presence of a copolymerization catalyst formed of a transition metal compound component (A) and a co-catalyst component (B) wherein the component (A) employs a transition metal compound having a chemical structure with a metallocene skeleton having two cross-linking groups wherein at least one of the cross-linking groups is a cross-linking group exclusively formed of a carbon-carbon bond cross-linking skeleton.

3. A method for producing an α-olefin - aromatic vinyl compound copolymer according to claim 1, wherein the two cross-linking groups of the metallocene skeleton are different from each other.

4. A method for producing an α-olefin - aromatic vinyl compound copolymer according to claim 2, wherein the two cross-linking groups of the metallocene skeleton are different from each other.

5. A method for producing an α-olefin - aromatic vinyl compound copolymer according to claim 1, wherein the copolymerization catalyst further containing an alkylating agent (C) is employed as a catalyst component.

6. A method for producing an α-olefin - aromatic vinyl compound copolymer according to claim 2, wherein the copolymerization catalyst further containing an alkylating agent (C) is employed as a catalyst component.

7. A method for producing an α-olefin - aromatic vinyl compound copolymer according to claim 1, wherein copolymerization is performed in the presence of an additional chain-transfer agent.

8. A method for producing an α-olefin - aromatic vinyl compound copolymer according to claim 2, wherein copolymerization is performed in the presence of an additional chain-transfer agent.

9. A method for producing an α-olefin - styrene copolymer according to claim 1, wherein the aromatic vinyl compound is styrene.

10. A method for producing an α-olefin - styrene copolymer according to claim 2, wherein the aromatic vinyl compound is styrene.
